# EUROPEAN PATENT SPECIFICATION

(11) **EP 2 800 442 B1**
(45) Date of publication and mention of the grant of the patent: **13.07.2016**
(21) Application number: 13165815.5
(22) Date of filing: 29.04.2013
(51) Int. Cl.: H04W 76/02, H04W 4/22, H04W 48/10, H04W 76/00, H04W 84/18

(54) **Emergency D2D Communication**
D2D-Notfallkommunikation
Communication D2D d'urgence

(43) Date of publication of application: 05.11.2014
(73) Proprietor: FUJITSU LIMITED, Kawasaki-shi, Kanagawa 211-8588 (JP)
(72) Inventor: Hunukumbure, Rajaguru Mudiyanselage Mythri, Uxbridge, Middlesex UB8 3WF (GB); Moulsley, Timothy, Caterham, Surrey CXR3 5EE (GB)
(74) Representative: Stebbing, Timothy Charles

(56) References cited:
- EP-A2- 1 209 886
- EP-B1- 1 844 586
- US-A1- 2010 279 647
- MAJID S ET AL: "Mobile Handsets as Sensing Nodes in an Auto-Configured Hierarchical Cognitive Radio Network Scheme for Immediate Post-Disaster Communications", IEICE TRANSACTIONS ON COMMUNICATIONS, COMMUNICATIONS SOCIETY, TOKYO, JP, vol. E92B, no. 7, 1 July 2009 (2009-07-01) , pages 2397-2405, XP001547792, ISSN: 0916-8516, DOI: 10.1587/TRANSCOM.E92.B.2397

## Description

### Field of the Invention

The present invention relates to device-to-device, D2D, communication between wireless devices, more particularly in emergency and disaster situations.

### Background of the Invention

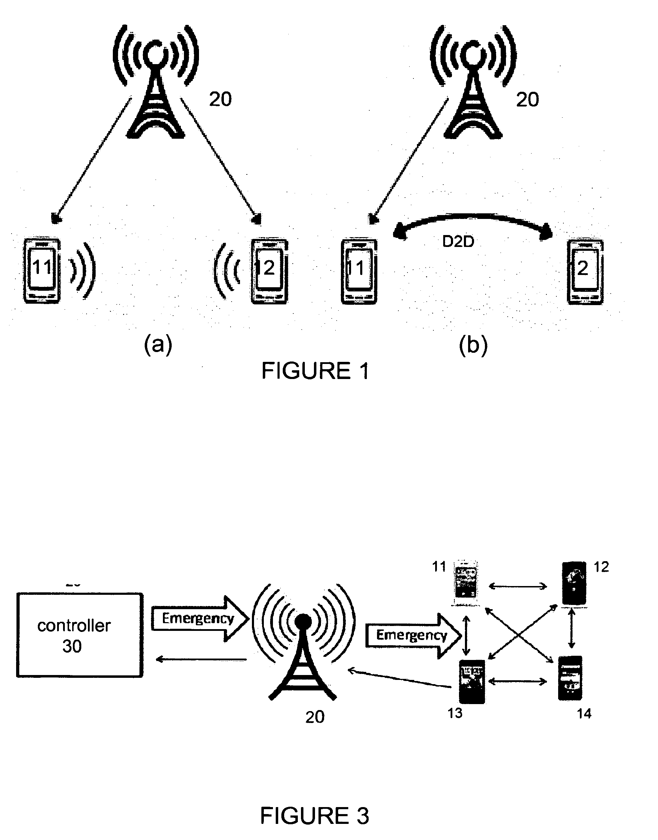

Wireless communication networks are widely known in which, as schematically shown in Figure 1(a), a base station (BS) 20, also referred to as an access point (AP), uses a given radio access technology, RAT, to communicate with user wireless devices or terminals 11 and 12, also called user equipments (UEs), or subscriber or mobile stations, which are within a coverage area (cell) of the BS. The arrows in Figure 1(a) represent a wireless communication path between the BS 20 and each of terminals 11 and 12. More particularly the arrows show the direction of transmission from the base station to the terminals; in other words the downlink (DL); there is also transmission in the reverse direction, that is on the uplink (UL) from the terminals to the base station.

Recently, schemes for direct, peer-to-peer communication between terminals have been proposed, in which mutual discovery of terminals in proximity to each other, as indicated by the waves emanating from terminals 11 and 12 in Figure 1 (a), leads to direct communication between those terminals as shown in Figure 1(b). Such direct communication is referred to in this specification as device-to-device or D2D communication. Although there are specific proposals for D2D within the constraints of 3GPP wireless communication systems, in the present invention the term D2D is employed in a broad sense, not just limited to operator-managed, licensed-spectrum systems networks based on 3GPP or LTE, but also including usage of other RATs which may be available for peer-to-peer communication between terminals, in particular short-range wireless technologies such as Wi-Fi (IEEE802.11) or Bluetooth (IEEE802.15). Modern smartphones offer such short-range wireless functionality in addition to being compliant with one or more wireless cellular network standards such as GSM, 3G, LTE or WiMAX.

In D2D communication, it is not necessary for every terminal to maintain a direct wireless link with the BS 20. In the case of terminal 12 in Figure 1(b) for example, the path of wireless communications may be via terminal 11 with which terminal 12 is in D2D communication. Thus, D2D involves terminals acting as relays for other terminals. The result is multi-hop communication comprising one or more hops via D2D wireless links and a final hop carried over a cellular wireless link - called device-to-infrastructure or D2I - between a terminal and a base station.

Thus, possible modes of communication (which may be used together) include:-
- D2D transmit, where a device transmits directly to another device
- D2D receive, where a device receives a transmission from another device
- Relay, where a device relays a message from another device
- D2I transmit where the device transmits to the network infrastructure (e.g. AP or eNB)
- D21 receive where the device receives from the network infrastructure (e.g. AP or eNB).

In this way, D2D can be used to extend coverage of a wireless network to areas outside the coverage area of any base station. D2D is one technique applicable to the so-called Self-Organizing Network, SON.

In the present invention, D2D is applied to emergency and disaster situations.
In a disaster or emergency situation, in order to be able to respond appropriately, it is very important that both the network and the terminals recognise the situation quickly. In the event of a major disaster, it is necessary not only to identify the disaster/emergency situation, but preferably also to ascertain if specific users are in need of emergency assistance.

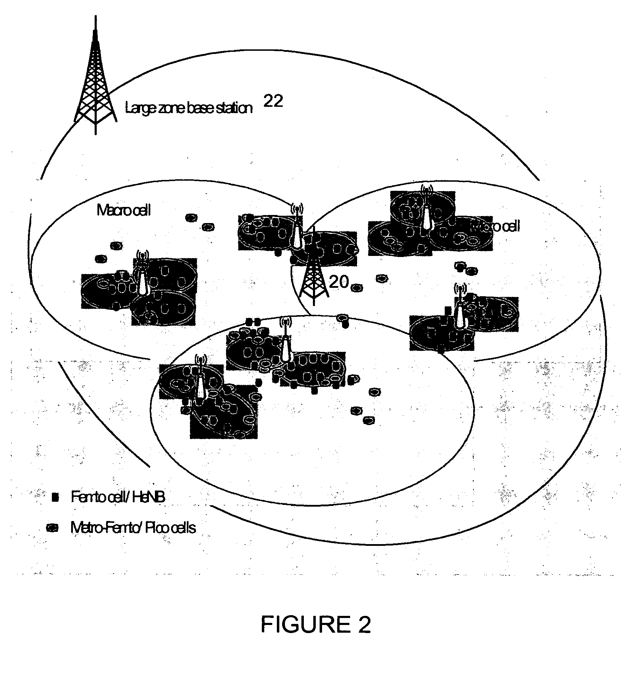

Meanwhile, cellular networks are becoming heterogeneous in nature, with Macro cells providing ubiquitous coverage and a range of smaller cells providing targeted enhancements to coverage and capacity. Figure 2 is a diagram depicting this so-called HetNet architecture. In addition to a base station 20 providing conventional macro cells of the cellular wireless network, there are APs 21 providing smaller, so-called pico cells, with still-smaller femto cells within these cells provided by another layer (or layers) of access points, not shown. In addition, a large zone base station 22 may be provided as explained below.

Of course, the infrastructure (base stations or APs) of the HetNet can get damaged in an emergency/disaster situation. In an event of a disaster or an emergency, one or more layers of these access points can become defunct, depending on the scale of the event. For very large-scale events like earthquakes and tsunamis, some operators have proposed to use large zone base stations as illustrated by 22 in Figure 2, which are very secure, high powered BSs able to cover up to 100km².

Terminals normally connect to the closest base station providing the strongest signal. In a disaster situation, however, the closest base station may have failed, in which case the network may provide emergency downlink coverage by increasing the power of the remaining layers or by activating a high powered large zone cell. However for the uplink to reach more distant base stations, the devices will have to transmit with higher power than usual to maintain communication. This can quickly lead to battery drainage for many devices (including smart-phones, whose batteries need regular recharging even in normal conditions). In an emergency situation, the preservation of device battery life is highly important, for rescue teams to be able to track a device. Also in a situation like an earthquake, some users/devices can be buried under rubble, so the increased path loss would not allow the devices to get connected in the uplink.

Another problem faced by cellular networks in emergency situations is that the network gets inundated with calls and quickly faces overloading and shut-down. Hence, users who are affected by the emergency/disaster and badly in need of communication may be unable get access to the network. In such a situation it is desirable to be able to avoid overload of the system and be able to identify which users are in particular need of attention.

EP 1844586 B1 discloses a communication system and method for emergency services personnel. Portable devices, each carried by emergency services personnel at an emergency site, have a first transceiver for wireless communication over a first network and a second transceiver for wireless communication over a second network, the first and second networks operating independently of each other, and both being D2D networks. The first and second networks are each linked via a gateway to a base station computer, and the first network has a longer range than the second network. If the base station computer finds it has lost communication with a target portable device over the first network, the base station computer broadcasts an alarm message identifying the target portable device over the first network. The receiving portable devices, upon receipt of the alarm message, broadcast a search message over the second network. If a portable device recognises itself as the subject of the search message, it broadcasts a reply over the second network.

Majid, S. et al, "Mobile Handsets as Sensing Nodes in an Auto-Configured Hierarchical Cognitive Radio Network Scheme for Immediate Post-Disaster Communications", ISSN: 0916-8516, discloses a scheme for post-disaster communications links in which surviving mobile handsets are employed as sensing nodes in an Auto-Configured Hierarchical Cognitive Radio Network. If a base station stops working, the mobile handsets within its coverage range switch to an emergency mode and form an ad-hoc group. The mobile handset nearest a surviving neighbour cell becomes a group leader and establishes a link with a mobile handset working normally in the neighbour cell. Using this co-operative mobile handset as a relay node, the group leader establishes a link to the backbone network.

US2010/0279647 A1 discloses a technique for allowing mobile devices out of range of a communications network to communicate via D2D communication. Information from a plurality of devices is combined to indicate occurrence of an emergency event, and the combined information is used to generate and transmit a report message. The report message is handed off as necessary between devices until it can be transmitted from a device having access to the communications network.

EP 1209886A2 discloses a scheme for notifying users of a wireless communication system about an emergency situation. A controller receives information about a troubled geographical area and identifies users located in that area. It then initiates sending of an emergency notification message to at least one of the users, in the form of a page, voice message or text message.

### Summary of the Invention

According to a first aspect of the present invention, there is provided a wireless communication method comprising:
operating one or more base stations with wireless links for downlink communications with a plurality of terminals,
the one or more base stations broadcasting a trigger signal which is an emergency notification; and
in response to the trigger signal, operating at least a first terminal of the plurality of terminals in a first mode in which a device-to-infrastructure, D2I, wireless link is used for uplink communications with one or more of the base stations, and operating at least a second terminal of the plurality of terminals in a second mode in which a device-to-device, D2D, wireless link is used for uplink communications, wherein the first terminal relays to a said base station, over said D2I wireless link, communications received from the second terminal via said D2D wireless link; further comprising:
   determining, at each terminal, whether the terminal is a terminal in need, namely a terminal a user of which needs assistance due to the emergency; and
   determining, at each terminal, whether to operate in the first mode or the second mode based on any of:
      - a received signal power in the downlink;
      - a response, or lack of response, from the base station to a D2I transmission made by the terminal;
   transmitting, from a terminal in need, a communication which at least identifies the terminal and its location and detecting, by a terminal operating in the first mode, the communication from the terminal in need; and
   relaying to the base station, from a terminal operating in the first mode, a communication detected from a terminal in need;
wherein the transmitting and detecting are separated in time from the relaying, the second mode providing a time period during which the transmitting and detecting are prioritised, and/or a time period during which relaying is prioritised.

Thus, in the present invention, the transmitting and detecting are separated in time from the relaying, the second mode providing a time period during which the transmitting and detecting are prioritised, and/or a time period during which relaying is prioritised. This allows terminals to "listen" for possibly weak signals from terminals in need without these being subject to interference from other wireless communications in the system

It may be assumed that prior to the trigger signal, uplink communications are conducted generally by conventional, D2I, wireless links between terminals and base stations, with D2D used only on an ad-hoc basis and as determined individually by terminals without any central coordination. The trigger signal may be broadcast in response to detecting problems with at least some of these D2I links. An effect of the invention is to reconfigure the terminals so that at least some terminals employ D2D on a coordinated basis. It should be noted that D2I and D2D wireless links are not mutually exclusive and can be present in the same terminal. Thus for example the first terminal referred to above has at least one D2D link with the second terminal whilst maintaining a D2I link with the base station. It should further be noted that the D2D link referred to above includes multiple-hop D2D links. That is, the second terminal referred to above need not communicate directly with the first terminal and there may be one or more intermediate D2D links between them.

In practice, of course, there will be several terminals served for at least downlink communications with the same base station and consequently, the terms "first terminal" and "second terminal" generally stand for sets of terminals respectively.

D2I links may fail due to an emergency event having occurred. Embodiments of the present invention are particular application to management of emergencies as discussed previously. Thus, the trigger signal is an emergency notification.

The base station may send an acknowledgement in response to the relayed communication from the terminal in need. This may be done by way of a broadcast message identifying all terminals from which communications have been received.

Preferably, a controller linked to the wireless communication system is employed to manage the emergency. This controller may also be responsible for broadcasting (or causing to be broadcast) the trigger signal. Thus, the method may comprise forwarding the communications, relayed to the base station, to a controller for managing the emergency, the controller causing the transmitting and detecting, and the relaying, to be repeated until a termination criterion is reached.

Preferably, when repeating the transmitting and detecting, and relaying steps, a terminal in need which has received an acknowledgement performs the detecting in place of the transmitting, and relays any detected communication to a terminal operating in the first mode. This expands the number of terminals which are able to detect communications from the remaining terminals in need.

The emergency referred to above can be identified in various ways, including by the affected terminals themselves. Thus, the method may comprise a terminal identifying an emergency event and transmitting a signal for notifying the controller of the emergency. Another way to identify existence of an emergency is by identifying multiple failures of D2I wireless links as experienced by devices which were connected to the base stations. The network controller may identify this situation from analysing failure reports of multiple base stations in a particular region or area.

Not only the identities of terminals, but also their human users, may be identified in a method of the invention. Thus, the method may further comprise the controller identifying users in need of assistance by linking the identifications of terminals contained in the forwarded communications, to user records.

Preferably, the method involves a terminal entering a power saving mode in response to the trigger signal, so as to conserve battery power for subsequent D2I or D2D communications.

According to second to fifth aspects of the present invention, there is provided a wireless communication system, a terminal, a base station, and computer software as defined in the appended claims.

Here, it should be noted that although D2D capability of terminals is known per se, according to this aspect of the present invention the switch to D2D-mode communication is triggered by a trigger signal from the base station.

The above second to fifth aspects may have any of the optional features outlined above with respect to the method of the invention.

An embodiment of the present invention can provide a method for operating a wireless communication system comprising a plurality of base-stations (or Access Points, APs) and at least one mobile station/terminal. The operation of the communication link between at least one of the terminals and at least one of the APs becomes impaired due to an emergency. Optionally, the terminal detects the emergency. The terminal enters an emergency mode which comprises D2D operation. The downlink may be a direct link with the base station.

The network sends a signal which may trigger the terminal to enter the emergency mode. The emergency mode may involve low power operation; and/or it may comprise the terminal detecting a local emergency and entering a local emergency mode.

A local emergency is defined as an emergency which affects one (or few) of the APs (or eNBs) belonging for example to a lower tier of APs in a heterogeneous network, like a building fire. The network will have to rely on UE reports and notification of failing APs to identify such local emergencies.

As is evident from the foregoing, the present invention involves signal transmissions between base stations and terminals in a wireless communication system. A base station may take any form suitable for transmitting and receiving such signals. It is envisaged that the base stations will typically take the form proposed for implementation in the 3GPP LTE and 3GPP LTE-A groups of standards, and may therefore be described as an eNodeB (eNB) (which term also embraces Home eNodeB or femto/picocell eNB) as appropriate in different situations. However, subject to the functional requirements of the invention, some or all base stations may take any other form suitable for transmitting and receiving signals from terminals, such as the access point (AP) of an IEEE802.11 (Wi-Fi)-compliant WLAN.

Similarly, in the present invention, each terminal may take any form suitable for transmitting and receiving signals from base stations. For example, the terminal may take the form of a subscriber station, or a mobile station (MS), or any other suitable form. For the purpose of visualising the invention, it may be convenient to imagine the terminal as a mobile handset (and in many instances at least some of the terminals will comprise mobile handsets), however no limitation is to be implied from this.

Embodiments of the present invention are aimed at enabling the network side and the terminal side to identify and respond to emergency situations, particularly those affecting network operation, and further enabling fast and accurate information to be obtained about the potential victims in such disaster and emergency situations, so that rescue efforts can be effectively directed towards them. Embodiments can provide a method for both identifying the emergency situation, and for configuring the necessary changes in the network and terminals to enable appropriate use of device to device communication to transmit messages from terminals in need. This can overcome many of the obstacles faced by a wireless communication system in a disaster situation.

In particular, an embodiment of the present invention is capable of initiating a message flow even without the user's knowledge (if the user did not opt out of this). This can effectively benefit users trapped in buildings etc, who may not be able to communicate directly with the network in the uplink. The procedure can also be extended to include automatic operation for users who cannot initiate communications themselves.

### Brief Description of the Drawings

Reference is made, by way of example only, to the accompanying drawings in which:
Figure 1 shows the principle of D2D communication;
Figure 2 illustrates a heterogeneous network to which the present invention may be applied;
Figure 3 shows wireless devices conducting D2D communication in response to the an emergency trigger;
Figure 4 is a flowchart of process steps in an embodiment of the present invention;
Figure 5 is a signalling diagram for an embodiment of the present invention; and
Figure 6 is a schematic block diagram of functional blocks in a wireless device (terminal) to which the present invention may be applied.

### Detailed Description

Wireless communication can provide vital emergency response co-ordination in the event of an emergency or disaster. Virtually everyone carries a mobile device nowadays and the mere presence of a device is a good indicator of the presence of the user. The present invention takes advantage of mobile devices' capability for forming D2D links, in order to establish communication links with devices even if they cannot reach a conventional base station or access point (the term base station henceforth includes both base station and AP). Such links can be established even without the knowledge of the user.

Figure 3 illustrates the principle adopted in the present invention. In Figure 3, it is assumed that some kind of emergency has occurred and is known to a controller or command centre 30 in a wireless communication network. "Emergency" is here defined as some event which prejudices the safety or health of multiple users, including natural disasters, accidents and so forth. Whilst the emergency may have ramifications for network operation, this is not the primary consideration. Rather, the aim is to identify users who need rescue or other assistance. Such users will also be referred to as "victims" of the emergency.

The procedure to be described includes features for identifying the existence of the emergency, which may be done by the terminals themselves as explained below. The controller 30 sends an emergency notification to base stations in the wireless communication network, including a base station 20 as shown in the Figure. This base station broadcasts a corresponding emergency notification to wireless devices within its range. As explained below, terminals may be able to receive such a broadcast even if they are not able to respond directly to the base station.

Suppose that devices 12 and 14 for example cannot reach the base station 20 by direct uplink transmission. The messages from these devices (such as location information) can be relayed via one or more D2D links between devices 11, 12, 13 and 14 to a wireless device (13 in this example) having a D2I link with base station 20, and routed from the base station 20 to controller 30, allowing the necessary information to be quickly passed onto rescue services. This principle can improve the effectiveness of the rescue operations considerably.

Thus, in embodiments of the present invention, existence of an emergency/disaster situation is identified using a combination of factors, and users in need of assistance are identified. The use of device to device communications (D2D), regulated by the network/base station, is then activated to achieve the first hop of messaging for the devices in need to other devices nearby. Through one or more hops the message is transmitted back to a base station. The D2D (first hop) transmission is prioritized, for example by being given a dedicated time window in the networks as directed by the base station. Subsequent hops, including the final hop from a device to base station transmission are also given priority, so the effects of network congestion are mitigated.

Unless otherwise indicated, the embodiments are based on a cellular system which may employ multiple RATs (such as GSM, UMTS, LTE, WiFi). The system is assumed to be operating normally and then undergo a transition to an emergency situation where a significant fraction of the base stations and/or base station sites are not functioning.

The following steps detail one embodiment of the present invention, referring to an LTE-based wireless communication system by way of example, and how it could be used in practice. In LTE, the base stations are called eNBs and the terminals are UEs (user equipments) and these terms will be used henceforth for convenience, although it is to be understood they are not limiting. Before describing the embodiment, some relevant background information relating to LTE will be given to aid understanding.

In an LTE-based wireless communication system, on the downlink, user data as well as System Information Blocks (SIBs) are contained in a transport channel DL-SCH, carried on the Physical Downlink Shared Channel (PDSCH).

Each eNB broadcasts a number of channels and signals to all UEs within range, whether or not the UE is currently being served by that cell. These include a Physical Broadcast Channel PBCH which carries a so-called Master Information Block (MIB), giving, to any UEs within range of the signal, basic system information enabling the UE to receive and decode the SIBs. In addition, synchronization signals (PSS/SSS) are used to inform UEs within range of a frequency band and/or time slot used by the eNB for communications in that cell.

Once a UE has decoded the system information, it can follow a Random Access (RA or RACH) procedure to access the network. The term "Random Access" (RA) is used because the identity of the UE (or UEs) using the resources at any given time need not be known in advance by the network. A UE may be in "RRC_Connected" mode in which it has a RRC connection with the network, or an "RRC_Idle" mode in which the UE is switched on but does not have any established RRC connection. Thus, RACH is used to (amongst other things) move a UE from RRC_Idle to RRC_Connected mode. Once the UE has moved to RRC_Connected mode, it can be individually configured with further, UE-specific RRC signalling. For example it receives from the eNB an identifier (C-RNTI) which it uses as a UE ID to identify itself in its subsequent uplink communications.

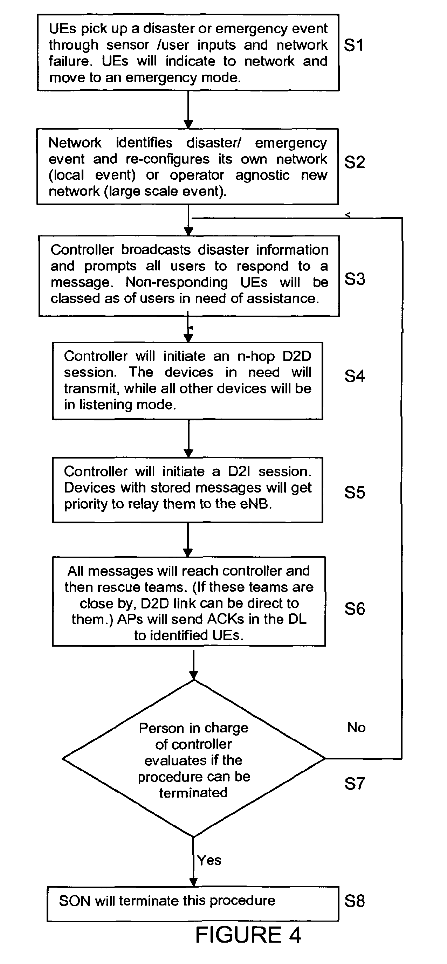

The procedure in this embodiment is set out in the flowchart of Figure 4 having steps S1 - S8, and further explained as follows.

### S1

To begin with, prior to the emergency, it is assumed that the network is in a normal operating mode, in which wireless communication between UEs and eNBs is basically conducted through conventional cellular wireless (D2I) links. Thus, the initial, normal operating mode is essentially a D2I mode, without excluding individual use of D2D to supplement the D2I links. In this situation, there are no co-ordinated D2D or D2I communications, co-ordinated by the eNB. All communications are initiated by the UEs based on their individual needs.

As a first step, it is necessary to recognise the existence or commencement of the emergency and optionally, this involves the UEs and/or their users. That is, a UE may detect an emergency or disaster situation through measurements made with multiple sensors. It could detect a sudden shock or vibration or a rise in the temperature. The user could detect the emergency and press a dedicated key to indicate the emergency situation to the UE. Also, the UE could detect a sudden loss of network connection, as the nearer cells to the UE (in Fig. 1) become defunct. Preferably a combination of two or more such events prepares the UE to be placed in a special emergency mode. The UE will send a message to the network about the perceived emergency or event, then waits to receive a confirmation of the emergency mode from the network (or this could possibly be activated autonomously).

Another way to recognise the existence or commencement of the emergency is through monitoring the state of D2I links between eNBs and UEs. If many D2I links fail at the same time, particularly for multiple base stations in the same geographical area or building, this is indicative of an emergency.

The UE may learn of the emergency for the first time by broadcast of an emergency notification from the network (see S3 below). In any case, the power saving mode is preferably adopted by all UEs in the disaster/emergency area in which an emergency/ disaster situation has been identified. Users of these UEs might now be in need of emergency assistance (so-called "UEs in need"), or not. Either way, all these UEs are placed in the power saving mode, terminating their non-critical communications (like on-line gaming or downloads). This step is aimed at achieving two objectives. The UEs have enough power to engage in the D2D and D2I communication phases detailed later and also it frees up resources in the eNB for vital communications.

### S2

When the network receives multiple notifications of an emergency/disaster event and/or reports of network failure it will enter into an emergency response mode, which is a mode of operation of the network (or part of the network including at least one eNB) which is different from the normal operating mode. This mode of operation is, to a greater extent than the normal operating mode, a D2D mode, in which at least some of the terminals are reliant upon D2D links to gain uplink access to the network. More particularly, in the emergency mode D2D communication is alternated with D2I communication in a manner to be described.

In the case of network failure, and depending on the scale of the event, the network resource may be re-configured such that a single operator network can cover the disaster/ emergency region (like in a building fire, local emergency) or an operator agnostic network has to be set-up through large zone base stations (such as 22 in Fig. 2). These terms can be explained as follows.

Single operator network - in a local emergency, a given operator's base station (or eNB) can cover the emergency area. This single operator can transmit other PLMN-IDs (other operators' IDs) to mimic their networks, so all UEs in need of help can access this base station, through D2D. Also, each network can enforce this D2D mode independently, if they have adequate coverage in the area.

Operator agnostic network - in a large scale disaster, network resources (base stations) of all operators will get defunct and only a few will survive. An Emergency Self-Organizing Network (E-SON) will co-ordinate with these surviving base stations and set up an ad-hoc, operator agnostic network. This network will transmit all related PLMN-IDs so the UEs belonging to any operator can use this network.

Although outside the scope of the present invention, the setting up of such a network can be made through E-SON control. For present purposes, it is assumed that the coverage to at least some of the UEs may be provided or re-instated in a disaster region through either of the above mechanisms. Depending on the scale of the emergency, the recovered network may be controlled by either the operator's normal controller or that of the operator agnostic E-SON, both referred to as "the controller" below.

### S3

The controller 30 will broadcast messages (through the available base stations) to declare the emergency (either to confirm or notify the emergency state). These messages act as a trigger to reconfigure the network for operating in an emergency mode. In particular the messages are effective, firstly to identify (or allow UEs to identify) users in need of emergency rescue; and secondly, to prompt UEs to determine whether or not they now have a direct (D2I) uplink connection. Henceforth, UEs the users of which are in need of rescue, help or other assistance are referred to as "UEs in need".

Within an LTE-based wireless communication system, there are several options on where to include the broadcast message noted above in step (c) above as per the LTE/LTE-A standards. It can reside on the broadcast notifications especially designed for emergency disaster situations. These are termed as ETWS (Earthquake and Tsunami Warning System) and CMAS (Commercial Mobile Alert System) warning messages, and are transmitted on pre-defined System Information Blocks (SIBs). Alternatively, a new SIB could be defined for the future LTE standards, where these said messages can be broadcast. A third option is to use the PMCH (Physical Multi-cast CHannel), which can only be transmitted in MBSFN (Multi-cast Broadcast Single Frequency Network) sub-frames. The PMCH are intended for high bit rate channels like mobile TV. However it will be possible to use PMCH for the present short message broadcast purposes, if the UE is able to locate the necessary control information on the MBSFN transmission. A fourth option for the broadcast messages in LTE is to define a specific RNTI (Radio Network Temporary Identifier) and use the PDSCH (Physical Downlink Shared Channel), which is the common data channel in the downlink.

The key feature in all three possibilities is that to initiate these broadcasts, two way signalling is not needed. The UEs will be able to receive these broadcasts even in their idle modes, without necessarily gaining connectivity in the uplink.

The identification of users in need of help can be a simple request to respond by pressing a specific key or a combination of keys, for example. The request to respond may be generated by the UE in response to the emergency notification, or could be a separate message broadcast from the eNB. By default all users who do not respond can be assumed to be in need of help. Thus, the user is given the option to opt out of emergency help and if the user does not, the UE assumes he/she is in need of help, and determines itself to be a UE in need.

Additionally, another message can be broadcast to identify users who are in need of help and also can respond to messages. Users responding to this message can be categorized as being definitely in need of help. (This identification is by the device, not the network, as we assume the uplink is not necessarily reachable by the devices with a single hop). Any other feature, using the advanced capabilities of user devices already in the emergency mode can be used by the UE to determine that the user is in need of emergency assistance.

As an example, the UE being stationary without user interaction, or a user having an RFID being in close proximity, without movement, may be judged as indicative of the user requiring assistance.

Alternatively a UE may determine based on received signal strength from the eNB failing below a predetermined threshold, that it should operate in a D2D communication mode (see below).

### S4

The controller will get information about the disaster event from many UEs (who may not be in need of assistance) and base stations experiencing partial failure.

The controller now initiates a session of D2D communication mode to extract location information from the devices (users) in need of rescue. UEs in need (as determined for example because the UE did not get the necessary response from the user), place themselves in the D2D transmit mode. These UEs perform any necessary reconfiguration for transmitting via D2D.

UEs which are not in need, and which were able to respond to the network on the UL (D2I), configure themselves to be in the D2D listening mode (the D2D receive mode referred to earlier). In this mode the UEs are ready to receive a transmission from a UE in D2D transmit mode and subsequently to relay messages, either to another UE or to an eNB. The message transmitted from the UE in need should at least contain the UE identifier and the location details last stored in this UE. Many new smartphones are capable of automatically updating their location details. Additionally the message could include information such as whether the user is stationary (through RFID reading) etc. to help the emergency services.

In this way, the UEs configured to be in receive mode can relay messages from the UEs in need. Technically, the receive mode devices should switch to the eNB's time slot (in TDD) or frequency band (in FDD) to receive these D2D messages, assuming that the devices in need are transmitting in the normal user time slot or frequency. This could be done vice-versa as well; in other words the UEs in D2D transmit mode may switch to the eNB's time slot/frequency band to transmit their information.

In step S4 of Figure 4, the "n-hop" in many cases will be a single hop, but if the distances to be covered are too great or the radio conditions are unfavourable, it can be increased as desired.

Incidentally, it is assumed that the time slots/ frequency bands do not change between cells/eNBs, but are constant for the entire operator network (otherwise a handover between two cells will be very complicated). Even if a surviving eNB has to transmit another operator's PLMN-IDs, the UEs will lock into primary and secondary sync signals (PSS, SSS) and be able to identify the band/ time slots for the D2D transmit and listen modes.

The transmitting devices can use polling or contention based mechanisms (for example) using CSMA (carrier sense multiple access) schemes for avoiding collisions and achieving successful message delivery. Some suitable schemes (for LTE) are described in the document 3GPP LTE Spec., "Network Sharing, Architecture and Functional Description", TS23.251, v11.3.0.

### S5

After this time window, the controller will instruct (through eNBs) the devices previously in the listening mode to switch to transmit mode and relay back any messages they have received. That is, the UEs now forward on to the eNB any messages they have detected from the non-UEs in need. This can be handled through normal RACH based radio access for the devices, with any devices having stored D2D messages for relaying getting priority. This step includes the above mentioned D2I session using eNB-nominated transmit power levels for the UEs. There can be other methods employed (including CSMA noted above) to achieve message transmission in this link. In addition, in the D2I session, even the UEs in need of help can attempt direct connection to eNB and transfer the emergency help request messages. This allows two options for the UE to forward its message:- the D2D route and possibly the direct D2I route.

If it is a large scale disaster event many eNBs will co-ordinate (under the SON) to execute these D2D sessions in synchronisation. For local emergencies it can be assumed that only one eNB is involved in setting the D2D sessions, in which case a neighbour eNB may be unaffected and operate in its normal way.

### S6

Upon successful receipt, the eNBs route all the collected messages to the controller. The eNBs will broadcast an ACK message with IDs of all UEs whose messages were successfully received. As the DL is stronger than the UL and therefore more likely to reach the UEs in need, these UEs will read this message to check if their ID is in the ACK list. If so they will stop attempting the D2D (or D2I) messaging route in the next time interval and may now act as relays for other UEs in need. As already mentioned, the controller can know the originating UEs from the identifier contained in the original message. As the eNBs have the coverage in the DL, the eNB can broadcast the ACK messages with the UE IDs, so that each relevant UE will know its message was received.

The network retains certain information (name, address) of the user linked to a UE (or specifically a SIM card) for example for billing purposes. By making this user profile available to the SON controller, the UEs responding can each be linked to a user.
The controller matches device ID with user profile, records the user as being accounted for, and sends these profiles/ location information to the emergency rescue teams. These devices can now reconfigure themselves to act as relays in subsequent D2D transmit/ receive windows. The controller also keeps a record of the UEs/users so far accounted for by the procedure.

The time window referred to above can be one or a multiple of time slots, and need not be at regular intervals. The (SON) controller will set up the first time window and later collect the messages in the D2I transfer as indicated in Fig. 2. Then after a time lapse, it will order the 2^{nd} time window to collect more messages. Thereafter it will repeat the process until it is satisfied all the messages initiated by the users (UEs) in need have reached the system. There need not be a fixed pattern for these messaging intervals.

### S7

Step S7 determines whether or not to terminate the procedure, based on a judgement on whether most or all UEs capable of being reached, have already been reached. This determination can be made in various ways. As already mentioned, the controller knows the details of the users which were on the network prior to the emergency, and so in the case of a local emergency, based on the number of connected and non-UEs recorded as a result of steps S3 to S6, as well as any information obtained by other means (such as users directly notifying their condition to the network), the controller can calculate the proportion of users presently accounted for. A threshold value of say, 90% of users being accounted for, may be adopted as a criterion for terminating the procedure.

In the case of a large scale emergency, the eNBs and some controllers can become defunct and precise information on the number of users involved may not be available. In this case, the controller may examine the number of new messages coming through in each new session of D2D and D2I and when this has reached zero (repeatedly), decide to stop the process. Preferably, a person in charge of the controller makes the final decision, allowing other inputs on the scale and severity of the disaster to be taken into account when making this decision.

Assuming that it is not determined to terminate the procedure (step S7, "No"), Steps S3 to S6 are repeated, preferably by incrementing the transmission power in S3. But only UEs in need, whose message did not make it through to the eNB (more specifically the UE-ID and the location information from this response) will transmit this time. All other devices, including the devices which received successful ACKs in S6, will be in listening mode. Now the transmit powers of the devices (in need) can be incremented, to enable them to be captured by a wider spread of other devices. However with higher transmit power, the collision probabilities will also increase. Steps S3 - S6 are repeated until the controller 30 (or a person in charge of the controller) decides almost all the UEs in need have been identified (S7, "Yes").

### S8

The procedure is then terminated. Although the emergency may be ongoing, the procedure has identified the UEs in need and gathered information from these UEs, allowing the users in need of assistance to be identified by name and location.

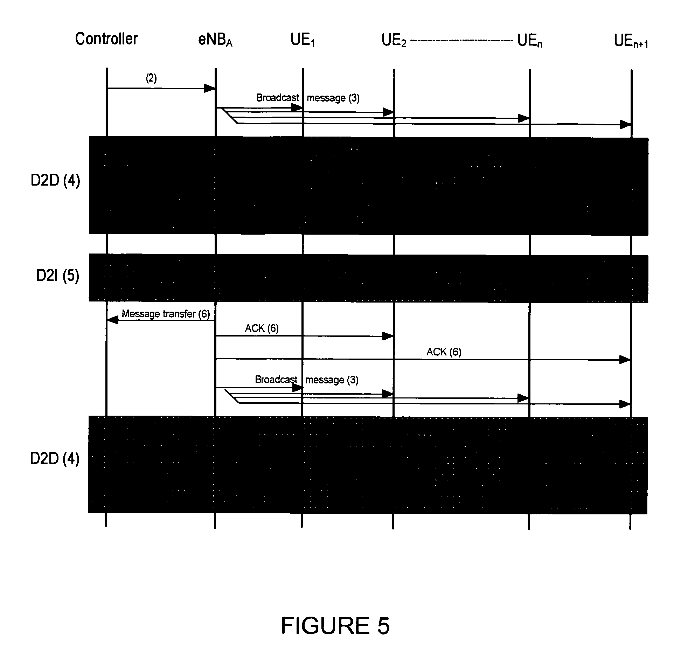

Figure 5 is a signalling diagram illustrating the signalling processes during the above procedure between the controller and each active eNB, and between each eNB and a total of (n+1) UEs. In Figure 5, the downward direction represents elapsed time, and the numbering (1) - (6) in Figure 5 corresponds to steps S1 - S6 of Figure 4, respectively. The diagram illustrates the signalling from only one active eNB's perspective and for other eNBs, the diagram could be extended along a third axis as a 3D diagram.

In Figure 5 the arrows labelled "success" indicate successful transmission between two UEs; on the other hand, other transmissions will fail due to collisions as indicated by "Message collision" in Figure 5.

In the case of multiple eNBs, depending on where the emergency event has occurred (at a cell edge for example) it may be preferable to use distinct time periods for the phases of operation. On the other hand, employing the same timing for multiple eNBs would enable a lot more devices to listen to the D2D messages at the cost of increasing collision (interference) probability between two D2D transmit messages.

Further features (which may be used in combination), may be employed as variants of the above embodiment, as follows.
(i) Terminals may autonomously detect the need to enter an emergency mode, for example, based on one or more of:-
   - User input
   - User initiating emergency calls
   - Loss of detectable network transmissions
      - Due to failure of base stations
      - Due to other factors such as collapse of building etc
   - Sensor input
      - Shock - physical shock on the device, possibly from being thrown about due to the emergency and/ or in an earthquake, due to the building vibrations.
      - Temperature
      - Motion (or lack of motion)
      - Lack of electrical power - the device can sense the sudden loss of light in a building, due to electricity failure.
   - Detection of incapacity of user - incapacity of the user can be detected, for example if the user is wearing an RFID tag which the mobile device can read periodically. A user remaining within the same proximity over several readings can be inferred as being stationary, and possibly in need of emergency assistance.
      As will be apparent, at least some of the above factors in themselves may be ambiguous and therefore it is preferred to combine as many factors as possible in order to determine whether a user is in need of rescue/assistance.
(ii) The network may instruct terminals to enter a general emergency mode in which they follow a different behaviour from their normal operation. In the general emergency mode limited features are available, in order to save battery power in the terminal and/or to control traffic loading on the network, for example:-
   - limited uplink data rate
   - restrictions on which RATs are to be used, such as only using a subset of the possible RATs or frequency bands for uplink access
   - prioritization of traffic and /or applications - this would also mean that certain high data rate services like video streaming will be suspended by the network in the cell(s) covering an area affected by the emergency/ disaster event. As already mentioned, for devices in need of emergency assistance, the eNB dedicates an exclusive time window for the D2D sessions. This does not require the eNB to establish links with the devices in need of assistance.
(iii) In some cases with a single D2D hop, the proposed second leg of communications, the D2I link (S4), may not be strong enough to cover the distances required in the uplink or due to unfavourable radio link conditions. In such a case one or more further D2D stages may be used relay the messages to an eNB.
(iv) In disaster and emergency situations, the rescue teams need to obtain information from victims' devices (for example the location data) quickly. If the rescue teams have arrived in the close vicinity of the disaster, in the D2D communication link the devices of the rescue teams can receive messages directly.

That is, any device in the cell which is not in need of emergency assistance will be in D2D receive mode, and this includes the emergency help/ rescue teams' mobile devices. These devices will read the messages which they receive whilst in the D2D listen mode, and identify the victims and their locations, rather than just passing the messages to the eNB in the D2I session.

In addition, the controller may direct received messages from other sources to the emergency rescue teams' devices so as to provide immediate guidance to rescue workers. The controller will know before-hand (e.g. from a database), these device numbers.

Preferably such messages are viewed directly by the rescue teams, before being passed on to the eNB, for example by briefly flashing up messages on the display prior to automatic forwarding. At least this will give an indication of a user in need of assistance, although the full details of the user will need to come from the controller, when it matches the user ID with the profile.
(v) The terminals may include features to detect a local emergency situation such as incapacity of the user (e.g. lack of movement), and in such an event activate additional emergency behaviour (such as transmission of UE location, transmission of SOS message). In general, the behaviour of the terminal in general emergency mode may depend on whether or not there is also a local emergency situation at the terminal. For example such a terminal may transmit its status or location to the network (e.g. then allowing it to be instructed to operate as a D2D relay).

The "general emergency mode" referred to earlier relates to both the local and widespread emergency events. The "local emergency mode" discussed here means that some devices may recognize the emergency and transmit user location and incapacitated behaviour of the user as an SOS message directly to the network, as an additional feature to the described D2D → D2I procedure of the embodiment. Thus. the "local emergency" applies to only one user or a small number of users, whilst "general emergency" refers to a large-scale event affecting many people.

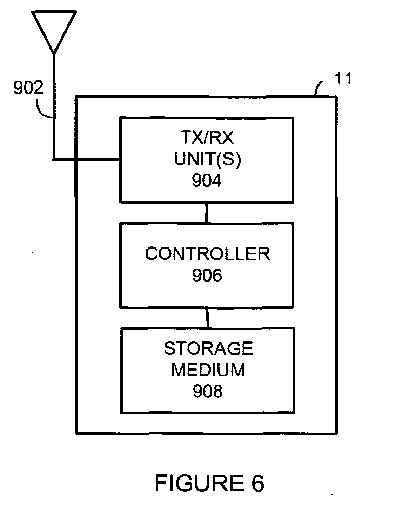

Figure 6 is a block diagram illustrating an example of a terminal 11 to which the present invention may be applied. The terminal 11 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The terminal 11 includes transmitter/receiver unit(s) 904 connected to at least one antenna 902 (together defining a communication unit) and a controller 906 having access to memory in the form of a storage medium 908. The controller may be, for example, microprocessor, digital signal processor (DSP), ASIC, FPGA, or other logic circuitry programmed or otherwise configured to perform the various functions described above. For example, the various functions described above may be embodied in the form of a computer program stored in the storage medium 908 and executed by the controller 904. The controller 906 is arranged, for example, to configure the terminal for entering the power saving mode, and for the D2D listen or D2D transmit modes as discussed previously. The transmission/reception unit 904 is arranged, under control of the controller 906, to transmit/receive a D2D message, receive an ACK and so forth as discussed previously.

To summarise, embodiments of the present invention provide a procedure aimed at enabling the mobile network side and the terminal side to identify and respond to emergency situations, particularly those affecting network operation, and further enabling the acquisition of fast and accurate information about the potential victims in such disaster and emergency situations, so that rescue efforts can be effectively directed towards them. Features of embodiments include identifying the emergency situation and the changes in the network and terminal to enable appropriate use of device to device communication to transmit messages from UEs in need. This overcomes many of the obstacles faced by a wireless communication system in a disaster situation.

More particularly, in the event of an emergency affecting a wireless communication system, direct wireless links between a terminal and a base-station may become impaired. The terminal detects, or is informed of, the emergency and enters an emergency mode in which it forms a D2D link with another terminal, at least for its uplink communication with the base station. A controller manages phases of operation in which D2D mode communication for allowing terminals to transmit information to other terminals, is alternated with D2I communication by which these terminals establishing connections to a base station can transmit information back to the controller.

Various modifications are possible within the scope of the present invention.

As already mentioned, for the UEs to determine the existence of the emergency in the first place in step S1 is optional. The existence of the emergency may be known before any UEs or their users are aware of it. In this case the procedure starts with the UEs being informed of the emergency and in response, entering the power saving and D2D mode.

Whilst the above description has focussed on uplink communication, it is also possible to use the D2D links set up by the procedure of the invention for downlink communication. As an example of downlink communication, the direction to nearest exit points or other points believed to be safe can be sent using text messages and/or email to the mobile device having the D2I link with the wireless network and from there, to other terminals via the D2D links.

Usually there will be no change in the RATs being used before and after the emergency, since it will be difficult to set up usage of a different RAT after the emergency. However, if required a different RAT could be used for the D2D communication, than for the D2I links. This could enable the D2I links to be separated in frequency from the D2D links, allowing some overlap between the D2D and D2I phases of operation shown in Figure 5 without increasing the risk of collision.

The location and coverage area of the controller is not important. In the event that one controller is responsible for covering an entire country or province, any emergency will normally apply to only a limited geographical area within the coverage area, and the controller will confine its control to the relevant part of the network. In that case, for example, the threshold value used to decide whether to terminate the procedure may be based on the number of users which were known to be within the geographical area concerned prior to the emergency.

In the above embodiment, the procedure is terminated when the controller judges that no more terminals are likely to be reached, the emergency itself still continuing. However, in the case of an emergency of short duration (such as a temporary but large-scale power outage) it might be desirable to broadcast an emergency termination message as an alternative way of terminating the procedure, in order to notify the mobile devices that the crisis is over and communication can proceed as usual. Such a message could be broadcasted directly to all mobile devices since it is assumed that there is no shortage of network capacity once the emergency has ended. The message may alternatively, or in addition, be forwarded on the D2D links to cover the situation where, for example, in order to save power, terminals have switched off their connection to the base station. Upon receiving this signal, each mobile terminal restores the settings to their usual values.

The flowcharts and block diagrams of the Figures illustrate the architecture, functionality, and operation of possible implementations of apparatuses, methods and computer program products according to various embodiments. In this regard, each block in a flowchart or block diagram may represent a module, segment, or portion of a code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending on the functionality involved. It will also be noted that each block of a block diagram and/or flowchart illustration, and combinations of blocks in a block diagram and/or flowchart illustration, can be implemented by special purpose hardware-based systems which perform the specified functions or acts, or combinations of special purpose hardware and computer instructions.

The terminology used herein is for the purpose of describing particular embodiments only and is not intended to be limiting. While the foregoing description describes several embodiments of the present invention, it will be understood by those skilled in the art that variations and modifications to these embodiments may be made without departing from the scope of the present disclosure as defined by the appended claims. The present invention encompasses all combinations of various embodiments or aspects of the invention described herein. It is understood that any and all embodiments of the present invention may be taken in conjunction with any other embodiment to describe additional embodiments of the present invention. Furthermore, any elements of an embodiment may be combined with any and all other elements of any of the embodiments to describe additional embodiments.

### Industrial Applicability

In the event of a disaster or an emergency many of the base stations in the affected area can become defunct and it may be possible to maintain coverage only by increasing power of distant base stations or through urgently set-up ad-hoc base stations (eNBs/APs). These solutions can cover the disaster area in the down-link. However when distant UEs try to connect to them in the uplink, the UE battery power can quickly drain. Also many users try to access the network during these events and the networks become quickly overloaded and go out of service. Both these causes can deny the chance for vital communications to the users who are in need of rescue. An embodiment of the present invention is aimed at overcoming both these shortcomings in a traditional cellular network. Nowadays virtually everyone has a mobile device and they carry it wherever they go. The procedure described above is capable of initiating a message flow even without the users' knowledge (if the user did not opt out of this). This can effectively benefit users trapped in buildings etc, who may not be able to communicate directly with the network in the uplink. The invention can also be extended to include automatic operation for users who cannot initiate communications themselves.

## Claims

1. A wireless communication method comprising:
operating one or more base stations (20) with wireless links for downlink communications with a plurality of terminals (11, 12),
the one or more base stations (20) broadcasting a trigger signal which is an emergency notification; and
in response to the trigger signal, operating at least a first terminal (11) of the plurality of terminals in a first mode in which a device-to-infrastructure, D2I, wireless link is used for uplink communications with one or more of the base stations (20), and operating at least a second terminal (12) of the plurality of terminals in a second mode in which a device-to-device, D2D, wireless link is used for uplink communications, wherein the first terminal (11) relays to a said base station (20), over said D2I wireless link, communications received from the second terminal (12) via said D2D wireless link; further comprising:
determining, at each terminal (11, 12), whether the terminal is a terminal in need, namely a terminal a user of which needs assistance due to the emergency; and
determining, at each terminal (11, 12), whether to operate in the first mode or the second mode based on any of:
- a received signal power in the downlink;
- a response, or lack of response, from the base station to a D2I transmission made by the terminal;
transmitting, from a terminal in need, a communication which at least identifies the terminal and its location and detecting, by a terminal operating in the first mode, the communication from the terminal in need; and
relaying to the base station (20), from a terminal (11) operating in the first mode, a communication detected from a terminal in need;
wherein the transmitting and detecting are separated in time from the relaying, the second mode providing a time period during which the transmitting and detecting are prioritised, and/or a time period during which relaying is prioritised.

2. The method according to claim 1 further comprising the base station (20) sending an acknowledgement in response to the relayed communication from the terminal in need.

3. The method according to claim 2 further comprising forwarding the communications, relayed to the base station (20), to a controller (30) for managing the emergency, the controller causing the transmitting and detecting, and the relaying, to be repeated until a termination criterion is reached.

4. The method according to claim 3 wherein when repeating the transmitting and detecting, and relaying steps, a terminal in need which has received an acknowledgement performs the detecting in place of the transmitting, and relays any detected communication to a terminal (11) operating in the first mode.

5. The method according to claim 4 further comprising a terminal identifying an emergency event and transmitting a signal for notifying the controller (30) of the emergency.

6. The method according to claim 3 further comprising the controller (30) identifying users in need of assistance by linking the identifications of terminals contained in the forwarded communications, to user records.

7. The method according to any preceding claim further comprising a terminal (11, 12) entering a power saving mode in response to the trigger signal.

8. A wireless communication system comprising a plurality of terminals (11, 12) operable for uplink and downlink communications over wireless links with a base station (20) and/or over wireless links with other terminals; wherein:
the base station (20) is arranged to broadcast a trigger signal as an emergency notification; and
the terminals (11, 12) are arranged to be responsive to the trigger signal to determine whether to operate in a first mode, in which a terminal uses a device-to-infrastructure, D2I, wireless link for uplink communications with the base station (20), or in a second mode, in which the terminal is arranged to use a device-to-device, D2D, wireless link for its uplink communications, wherein a terminal operating in the first mode is arranged to relay to the base station, over said D2I wireless link, communications received from a terminal in the second mode via said D2D wireless link;
each terminal (11, 12) arranged to determine whether the terminal is a terminal in need, namely a terminal a user of which needs assistance due to the emergency, and to determine whether to operate in the first mode or the second mode based on any of:
- a received signal power in the downlink;
- a response, or lack of response, from the base station to a D2I transmission made by the terminal; wherein
said terminal in need is arranged for transmitting a communication which at least identifies the terminal and its location;
said terminal operating in the first mode is arranged for detecting the communication from the terminal in need and for relaying to the base station (20) a communication detected from the terminal in need;
the transmitting and detecting being separated in time from the relaying, the second mode providing a time period during which the transmitting and detecting are prioritised, and/or a time period during which relaying is prioritised.

9. A terminal (11, 12) operable for uplink and downlink communication over a wireless link with a base station (20) and/or over wireless links with other terminals; wherein:
the terminal is arranged to be responsive to a trigger signal, broadcast from the base station as an emergency notification, to determine whether to operate in a first mode, in which a terminal uses a device-to-infrastructure, D2I, wireless link for uplink communications with the base station, or in a second mode, in which the terminal uses a device-to-device, D2D, wireless link for its uplink communications, wherein a terminal operating in the first mode is arranged to relay to the base station, over said D2I wireless link, communications received from a terminal in the second mode via said D2D wireless link;
the terminal is arranged to determine whether the terminal is a terminal in need, namely a terminal a user of which needs assistance due to the emergency, and to determine whether to operate in the first mode or the second mode based on any of:
- a received signal power in the downlink;
- a response, or lack of response, from the base station to a D2I transmission made by the terminal; wherein
when the terminal determines that it is a terminal in need, the terminal is arranged for transmitting a communication which at least identifies the terminal and its location; and
when operating in the first mode, the terminal is arranged for detecting the communication from the terminal in need and for relaying to the base station a communication detected from the terminal in need;
the transmitting and detecting being separated in time from the relaying, the second mode providing a time period during which the transmitting and detecting are prioritised, and/or a time period during which relaying is prioritised.

10. A base station (20) adapted for use in the wireless communication system according to claim 8 and arranged to:
broadcast the trigger signal which is an emergency notification for causing the terminals (11, 12) to determine whether to operate in the first mode or the second mode;
receive, over said D2I wireless links, communications relayed from a terminal in need;and
transmit an acknowledgement signal in response to received communications including the communications relayed over said D2I wireless links.

11. Computer software which, when executed by a processor in a terminal of a wireless communication system, performs the process steps of the terminal (11, 12) according to claim 9.

## Patentansprüche

1. Funkkommunikationsverfahren, umfassend:
Betreiben einer oder mehrerer Basisstationen (20) mit Funkverbindungen für Downlink-Kommunikation mit einer Mehrzahl von Endgeräten (11, 12),
wobei die eine oder mehrere Basisstationen (20) ein Auslösesignal rundfunken, welches eine Notfallmitteilung ist; und
in Reaktion auf das Auslösesignal, Betreiben zumindest eines ersten Endgeräts (11) der Mehrzahl von Endgeräten in einem ersten Modus, in welchem eine Vorrichtungs-Zu-Infrastruktur-,D2I, -Funkverbindung für Uplink-Kommunikation mit einer oder mehrerer der Basisstationen (20) verwendet wird, und Betreiben zumindest eines zweiten Endgeräts (12) der Mehrzahl von Endgeräten in einem zweiten Modus, in welchem eine Vorrichtungs-Zu-Vorrichtungs-,D2D, -Funkverbindung für Uplink-Kommunikation verwendet wird, wobei das erste Endgerät (11) an die Basisstation (20) über die D2I-Funkverbindung aus dem zweiten Endgerät (12) über die D2D-Funkverbindung empfangene Kommunikation weiterleitet, weiter umfassend:
Bestimmen, an jedem Endgerät (11, 12), ob das Endgerät ein bedürftiges Endgerät ist, nämlich ein Endgerät eines Anwenders, der Unterstützung aufgrund des Notfalls bedarf; und
Bestimmen, an jedem Endgerät (11, 12), ob es im ersten Modus oder im zweiten Modus zu betreiben ist, basierend auf einem von:
- einer Empfangssignalleistung im Downlink;
- einer Reaktion oder Fehlen von Reaktion aus der Basisstation auf eine vom Endgerät vorgenommene D2I-Sendung;
Senden, aus einem bedürftigen Endgerät, einer Kommunikation, welche zumindest das Endgerät und seinen Ort identifiziert, und Detektieren, durch ein im ersten Modus arbeitendes Endgerät, der Kommunikation aus dem bedürftigen Endgerät; und
Weiterleiten aus einem Endgerät (11), das im ersten Modus arbeitet, eine aus einem bedürftigen Endgerät detektierte Kommunikation an die Basisstation (20);
wobei das Senden und Detektieren zeitlich von dem Weiterleiten getrennt sind, der zweite Modus einen Zeitraum bereitstellen, während welchem das Senden und Detektieren priorisiert sind, und/oder einen Zeitraum, während welchem das Weiterleiten priorisiert ist.

2. Verfahren gemäß Anspruch 1, weiter umfassend, dass die Basisstation (20) eine Bestätigung in Reaktion auf die weitergeleitete Kommunikation aus dem bedürftigen Endgerät sendet.

3. Verfahren gemäß Anspruch 2, weiter umfassend Weiterbefördern der Kommunikation, die an die Basisstation (20) weitergeleitet wurde, an eine Steuerung (30) zum Verwalten des Notfalls, wobei die Steuerung das Senden und Detektieren und das Weiterleiten veranlasst, wiederholt zu werden, bis ein Beendigungskriterium erreicht wird.

4. Verfahren gemäß Anspruch 3, wobei beim Wiederholen des Sendens und Detektierens und der Weiterleitungsschritte ein bedürftiges Endgerät, das eine Bestätigung empfangen hat, das Detektieren anstelle des Sendens durchführt und irgendwelche detektierte Kommunikation an ein im ersten Modus arbeitendes Endgerät (11) weiterleitet.

5. Verfahren gemäß Anspruch 4, weiter umfassend ein Endgerät, das ein Notfallereignis identifiziert und ein Signal sendet, der Steuerung (30) den Notfall mitzuteilen.

6. Verfahren gemäß Anspruch 3, weiter umfassend, dass die Steuerung (30) Anwender identifiziert, die der Hilfe bedürfen, durch Verknüpfen der in den weiterbeförderten Kommunikationen enthaltenen Identifikationen von Anschlüssen, mit Anwender-Datensätzen.

7. Verfahren gemäß einem vorstehenden Anspruch, weiter umfassend ein Endgerät (11, 12), das in Reaktion auf das Auslösesignal in einen Stromsparmodus übergeht.

8. Funkkommunikationssystem, das eine Mehrzahl von Endgeräten (11, 12) umfasst, die für Uplink- und Downlink-Kommunikationen über Funkverbindungen mit einer Basisstation (20) und/oder über Funkverbindungen mit anderen Endgeräten betreibbar sind; wobei:
die Basisstation (20) ausgelegt ist, ein Auslösesignal als eine Notfallmitteilung rundzufunken; und
die Endgeräte (11, 12) ausgelegt sind, responsiv auf das Auslösesignal zu bestimmen, ob in einem ersten Modus, in welchem ein Endgerät eine Vorrichtungs-Zu-Infrastruktur-, D2I, -Funkverbindung zur Uplink-Kommunikation mit der Basisstation (20) verwendet, oder in einem zweiten Modus, in welchem das Endgerät ausgelegt ist, eine Vorrichtungs-Zu-Vorrichtungs-, D2D, -Funkverbindung für ihre Uplink-Kommunikation zu verwenden, zu arbeiten ist, wobei ein in einem ersten Modus arbeitendes Endgerät ausgelegt ist, über die D2I-Funkverbindung an die Basisstation aus einem Endgerät im zweiten Modus über die D2D-Funkverbindung empfangene Kommunikation weiterzureichen;
jedes Endgerät (11, 12) ausgelegt ist, zu bestimmen, ob das Endgerät ein bedürftiges Endgerät ist, nämlich ein Endgerät, dessen Anwender Unterstützung bedarf, aufgrund des Notfalls, und zu bestimmen, ob im ersten Modus oder im zweiten Modus zu arbeiten ist, basierend auf einem von:
- einer empfangenen Signalleistung im Downlink;
- einer Antwort, oder Fehlen von Antwort aus der Basisstation auf eine D2I-Übertragung, die durch das Endgerät vorgenommen ist, wobei
das bedürftige Endgerät zum Senden einer Kommunikation, welche zumindest das Endgerät und seinen Ort identifiziert, ausgelegt ist;
das im ersten Modus arbeitende Endgerät ausgelegt ist zum Detektieren der Kommunikation aus dem bedürftigen Endgerät und zum Weiterleiten an die Basisstation (20) einer aus dem bedürftigen Endgerät detektierten Kommunikation;
wobei das Senden und Detektieren zeitlich vom Weiterleiten getrennt werden, der zweite Modus einen Zeitraum bereitstellt, während welchem das Senden und Detektieren priorisiert sind, und/oder einen Zeitraum, während welchem das Weiterleiten priorisiert ist.

9. Endgerät (11, 12), das für Uplink- und Downlink-Kommunikation über eine Funkverbindung mit einer Basisstation (20) und/oder über Funkverbindung und mit anderen Endgeräten betreibbar ist; wobei:
das Endgerät ausgelegt ist, auf ein Auslösesignal responsiv zu sein, das aus der Basisstation als Notfallmitteilung rundgefunkt wird, um zu bestimmen, ob in einem ersten Modus, in welchem ein Endgerät eine Vorrichtungs-Zu-Infrastruktur-, D2I, -Funkverbindung für Uplink-Kommunikation mit der Basisstation verwendet, oder in einem zweiten Modus, in welchem das Endgerät eine Vorrichtungs-Zu-Vorrichtungs-, D2D, -Funkverbindung für seine Uplink-Kommunikation verwendet, zu arbeiten ist, wobei ein im ersten Modus arbeitendes Endgerät ausgelegt ist, an die Basisstation über die D2I-Funkverbindung aus einem Endgerät im zweiten Modus über die D2D-Funkverbindung empfangene Kommunikation weiterzugeben;
das Endgerät ausgelegt ist, zu bestimmen, ob das Endgerät ein bedürftiges Endgerät ist, nämlich ein Endgerät, dessen Anwender aufgrund des Notfalls Unterstützung bedarf, und zu bestimmen, ob im ersten Modus oder im zweiten Modus zu arbeiten ist, basierend auf irgendeinem von:
- einer Empfangssignalleistung im Downlink;
- einer Antwort oder Fehlen von Antwort aus der Basisstation auf eine durch das Endgerät vorgenommene D2I-Übertragung; wobei
wenn das Endgerät feststellt, dass es ein bedürftiges Endgerät ist, das Endgerät ausgelegt ist zum Senden einer Kommunikation, welche zumindest das Endgerät und seinen Ort identifiziert; und
beim Arbeiten im ersten Modus das Endgerät ausgelegt ist zum Detektieren der Kommunikation aus dem bedürftigen Endgerät und zum Weiterleiten einer aus dem bedürftigen Endgerät detektierten Kommunikation an die Basisstation;
wobei das Senden und Detektieren zeitlich vom Weiterleiten getrennt sind; der zweite Modus einen Zeitraum, während welchem das Senden und Detektieren priorisiert sind und/oder einen Zeitraum, während welchem das Weiterleiten priorisiert ist, bereitstellt.

10. Basisstation (20), ausgelegt zur Verwendung in dem Funkkommunikationssystem gemäß Anspruch 8 und ausgelegt:
das Auslösesignal, welches eine Notfallmitteilung ist, rundzufunken, um die Endgeräte (11, 12) zu veranlassen, zu bestimmen, ob im ersten Modus oder zweiten Modus zu arbeiten ist;
Empfangen, über die D2I-Funkverbindungen von aus einem bedürftigen Endgerät weitergeleiteter Kommunikation; und
Senden eines Bestätigungssignals in Reaktion auf empfangene Kommunikationen, einschließlich der über die D2I-Funkverbindungen weitergeleiteten Kommunikation.

11. Computer-Software, die bei Ausführung durch einen Prozessor in einem Endgerät eines Funkkommunikationssystems die Prozessschritte des Endgeräts (11, 12) gemäß Anspruch 9 durchführt.

## Revendications

1. Procédé de communication sans fil comprenant les étapes ci-dessous consistant à :
exploiter une ou plusieurs stations de base (20) avec des liaisons sans fil pour des communications en liaison descendante avec une pluralité de terminaux (11, 12) ;
ladite une ou lesdites plusieurs stations de base (20) diffusant un signal de déclenchement qui représente une notification d'urgence ; et
en réponse au signal de déclenchement, exploiter au moins un premier terminal (11) de la pluralité de terminaux dans un premier mode dans lequel une liaison sans fil de type « dispositif à infrastructure », D2I, est utilisée pour des communications en liaison montante avec une ou plusieurs des stations de base (20), et exploiter au moins un second terminal (12) de la pluralité de terminaux dans un second mode dans lequel une liaison sans fil de type « dispositif à dispositif », D2D, est utilisée pour des communications en liaison montante, dans lequel le premier terminal (11) relaie à une dite station de base (20), sur ladite liaison sans fil D2I, des communications reçues en provenance du second terminal (12) par l'intermédiaire de ladite liaison sans fil D2D ; le procédé comprenant en outre les étapes ci-dessous consistant à :
déterminer, au niveau de chaque terminal (11, 12), si le terminal est un terminal dans le besoin, à savoir un terminal dont l'utilisateur nécessite une assistance en raison de la situation d'urgence ; et
déterminer, au niveau de chaque terminal (11, 12), s'il convient d'opérer dans le premier mode ou le second mode, sur la base de l'un quelconque des éléments parmi :
- une puissance du signal reçu dans la liaison descendante ;
- une réponse, ou une absence de réponse, de la station de base, à une transmission D2I réalisée par le terminal ;
transmettre, à partir d'un terminal dans le besoin, une communication qui au moins identifie le terminal et son emplacement, et détecter, par le biais d'un terminal opérant dans le premier mode, la communication en provenance du terminal dans le besoin ; et
relayer vers la station de base (20), à partir d'un terminal (11) opérant dans le premier mode, une communication détectée à partir d'un terminal dans le besoin ;
dans lequel l'étape de transmission et l'étape de détection sont séparées dans le temps de l'étape de relais, le second mode fournissant une période de temps au cours de laquelle les étapes de transmission et de détection sont prioritaires et/ou une période de temps au cours de laquelle l'étape de relais est prioritaire.

2. Procédé selon la revendication 1, comprenant en outre l'étape dans laquelle la station de base (20) envoie un accusé de réception en réponse à la communication relayée en provenance du terminal dans le besoin.

3. Procédé selon la revendication 2, comprenant en outre l'étape consistant à acheminer les communications, relayées vers la station de base (20), à un contrôleur (30) en vue de gérer la situation d'urgence, le contrôleur amenant les étapes de transmission, de détection et de relais à être répétées jusqu'à ce qu'un critère d'interruption soit atteint.

4. Procédé selon la revendication 3, dans lequel, lors de la répétition des étapes de transmission, de détection et de relais, un terminal dans le besoin qui a reçu un accusé de réception met en oeuvre l'étape de détection à la place de l'étape de transmission, et relaie toute communication détectée vers un terminal (11) opérant dans le premier mode.

5. Procédé selon la revendication 4, comprenant en outre l'étape dans laquelle un terminal identifie une situation d'urgence et transmet un signal pour notifier la situation d'urgence au contrôleur (30).

6. Procédé selon la revendication 3, comprenant en outre l'étape dans laquelle le contrôleur (30) identifie des utilisateurs ayant besoin d'assistance en reliant les identifications de terminaux contenues dans les communications acheminées à des enregistrements d'utilisateurs.

7. Procédé selon l'une quelconque des revendications précédentes, comprenant en outre l'étape dans laquelle un terminal (11, 12) entre dans un mode d'économie d'énergie en réponse au signal de déclenchement.

8. Système de communication sans fil comprenant une pluralité de terminaux (11, 12) exploitables pour des communications en liaison montante et en liaison descendante sur des liaisons sans fil avec une station de base (20) et/ou sur des liaisons sans fil avec d'autres terminaux ; dans lequel :
la station de base (20) est agencée de manière à diffuser un signal de déclenchement sous la forme d'une notification d'urgence ; et
les terminaux (11, 12) sont agencés de manière à répondre au signal de déclenchement en vue de déterminer s'il convient d'opérer dans un premier mode, dans lequel un terminal utilise une liaison sans fil de type « dispositif à infrastructure », D2I, pour des communications en liaison montante avec la station de base (20), ou dans un second mode, dans lequel le terminal est agencé de manière à utiliser une liaison sans fil de type « dispositif à dispositif », D2D, pour ses communications en liaison montante, dans lequel un terminal opérant dans le premier mode est agencé de manière à relayer, vers la station de base, sur ladite liaison sans fil D2I, des communications reçues en provenance d'un terminal dans le second mode par le biais de ladite liaison sans fil D2D ;
chaque terminal (11, 12) est agencé de manière à déterminer si le terminal est un terminal dans le besoin, à savoir un terminal dont l'utilisateur nécessite une assistance en raison de la situation d'urgence, et à déterminer s'il convient d'opérer dans le premier mode ou le second mode, sur la base de l'un quelconque des éléments parmi :
- une puissance du signal reçu dans la liaison descendante ;
- une réponse, ou une absence de réponse, de la station de base, à une transmission D2I réalisée par le terminal ; dans lequel ledit terminal dans le besoin est agencé de manière à transmettre une communication qui au moins identifie le terminal et son emplacement ;
ledit terminal opérant dans le premier mode est agencé de manière à détecter la communication en provenance du terminal dans le besoin et à relayer, vers la station de base (20), une communication détectée à partir du terminal dans le besoin ;
dans lequel l'étape de transmission et l'étape de détection sont séparées dans le temps de l'étape de relais, le second mode fournissant une période de temps au cours de laquelle les étapes de transmission et de détection sont prioritaires et/ou une période de temps au cours de laquelle l'étape de relais est prioritaire.

9. Terminal (11, 12) exploitable pour une communication en liaison montante et une communication en liaison descendante sur une liaison sans fil avec une station de base (20) et/ou sur des liaisons sans fil avec d'autres terminaux ; dans lequel :
le terminal est agencé de manière à répondre à un signal de déclenchement, diffusé à partir de la station de base sous la forme d'une notification d'urgence, pour déterminer s'il convient d'opérer dans un premier mode, dans lequel un terminal utilise une liaison sans fil de type « dispositif à infrastructure », D2I, pour des communications en liaison montante avec la station de base, ou dans un second mode, dans lequel le terminal utilise une liaison sans fil de type « dispositif à dispositif », D2D, pour ses communications en liaison montante, dans lequel un terminal opérant dans le premier mode est agencé de manière à relayer vers la station de base, sur ladite liaison sans fil D2I, des communications reçues en provenance d'un terminal dans le second mode par le biais de ladite liaison sans fil D2D ;
le terminal est agencé de manière à déterminer si le terminal est un terminal dans le besoin, à savoir un terminal dont l'utilisateur nécessite une assistance en raison de la situation d'urgence, et à déterminer s'il convient d'opérer dans le premier mode ou le second mode, sur la base de l'un quelconque des éléments parmi :
- une puissance du signal reçu dans la liaison descendante ;
- une réponse, ou une absence de réponse, de la station de base, à une transmission D2I réalisée par le terminal ; dans lequel lorsque le terminal détermine qu'il correspond à un terminal dans le besoin, le terminal est agencé de manière à transmettre une communication qui au moins identifie le terminal et son emplacement ;
lorsqu'il opère dans le premier mode, le terminal est agencé de manière à détecter la communication en provenance du terminal dans le besoin et à relayer, vers la station de base, une communication détectée à partir du terminal dans le besoin ;
dans lequel l'étape de transmission et l'étape de détection sont séparées dans le temps de l'étape de relais, le second mode fournissant une période de temps au cours de laquelle les étapes de transmission et de détection sont prioritaires et/ou une période de temps au cours de laquelle l'étape de relais est prioritaire.

10. Station de base (20) apte à être utilisée dans le système de communication sans fil selon la revendication 8, et agencée de manière à :
diffuser le signal de déclenchement, lequel représente une notification d'urgence, en vue d'amener les terminaux (11,12) à déterminer s'il convient d'opérer dans le premier mode ou le second mode ;
recevoir, sur lesdites liaisons sans fil D2I, des communications relayées à partir d'un terminal dans le besoin ; et
transmettre un signal d'accusé de réception en réponse à des communications reçues, incluant les communications relayées sur lesdites liaisons sans fil D2I.

11. Logiciel, qui, lorsqu'il est exécuté par un processeur dans un terminal d'un système de communication sans fil, met en oeuvre les étapes de procédé du terminal (11, 12) selon la revendication 9.
